# EUROPEAN PATENT SPECIFICATION

(11) **EP 1 884 405 B1**
(45) Date of publication and mention of the grant of the patent: **05.10.2011**
(21) Application number: 07015121.2
(22) Date of filing: 01.08.2007
(51) Int. Cl.: B60Q 1/00, B60R 16/03

(54) **An electronic control unit, control method and computer program**
Elektronische Steuereinheit, Steuerverfahren und Computerprogramm
Unité de commande électronique, procédé de commande et programme informatique

(30) Priority: 03.08.2006 JP 2006212224
(43) Date of publication of application: 06.02.2008
(73) Proprietor: Sumitomo Wiring Systems, Ltd., Yokkaichi-city, Mie 510-8503 (JP)
(72) Inventor: Nishio, Yasuhiro c/o Sumitomo Wiring Systems, Ltd., Yokkaichi-City, Mie 510-8503 (JP)
(74) Representative: Müller-Boré & Partner Patentanwälte

(56) References cited:
- JP-A- 2007 253 742

## Description

The present invention relates to an electronic control unit for performing a body control of an automotive vehicle, to a control method and to a computer program product.

Conventionally, an electronic control unit (ECU) for performing body controls such as a door lock control and a lamp control is installed in an automotive vehicle (see, for example, Japanese Unexamined Patent Publication No. JP 8272700). Generally, automotive vehicles are graded into a high grade, a low grade and the like according to their specifications (functions). Electronic control units in conformity with the specifications of the respective grades are used to realize suitable controls for the respective grades.

The electronic control unit includes a microcomputer for performing calculations to control the respective functions (control targets). Since this microcomputer needs to be optimized according to the specification of each grade, different microcomputers had to be used for the respective grades. In other words, a microcomputer having a smaller number of input/output ports (number of control input/output pins) due to a smaller number of functions to be controlled had to be adopted, for example, for a low grade vehicle, whereas a microcomputer having a larger number of input/output ports due to a larger number of functions to be controlled had to be adopted for a high grade vehicle.

Further, softwares are installed on the microcomputers, but software compatibility cannot be achieved between the microcomputer for low grade vehicles and the one for high grade vehicles in many cases due to the performances of the microcomputers and different manufacturers of the microcomputers. Thus, similar to the microcomputers, different softwares had to be adopted for the respective grades. Specifically, since the number of input/output ports of the microcomputer differs in each grade as described above, it is necessary to set an individual port assignment of the microcomputer for each grade and softwares for different port assignments of the microcomputers also differ. Particularly in the case of controlling many functions as for the high grade, the number of input/output ports increases, wherefore software for assigning these input/output ports becomes complicated and the capacity of the software also increases. In the case of the high grade, the microcomputer for processing the software is required to have a high processing ability since the software is complicated and has a large capacity.

Accordingly, both microcomputers and softwares had to be individually developed (designed and evaluated) for the respective grades, and development costs and development lead times required for this become problematic. For example, in the case of developing a software, development man-hours are given by a product of a grade number: e.g. (development days: 30 days) x (grade number: 2) = (development man-hours: 60 days). Thus, if resources (developers, facilities, costs, etc.) devoted to development are the same, the development days are doubled, i.e. the lead time is prolonged. In order to develop within the same duration of days, twice the development resources have to be devoted, increasing the development cots. For such individual development of microcomputers, there arises a problem of management costs such as microcomputer part number management. Further, since the capacity of the software differs for each grade, different memories are necessary to store the softwares.

The present invention was developed in view of the above problems, and an object thereof is to provide an electronic control unit, a control method and a computer program product capable of commoditizing a microcomputer and/or a software and also reducing costs and lead times required for the developments of these or management costs particularly without individually developing a microcomputer (hardware such as a microcomputer and a memory) and a software to be installed on the microcomputer according to the specification (grade) of an automotive vehicle.

This object is solved according to the invention by the features of the independent claims. Preferred embodiments of the invention are subject of the dependent claims.

According to the present invention, there is provided an electronic control unit equipped with at least one microcomputer for performing calculations for controlling control targets by executing a specified program has a plurality of grades including a first grade and a second grade not equipped with some of functions equipped in automotive vehicles of the first grade, and is provided with input circuits for substantially constantly or periodically or in-use inputting signals representing that the control targets are not to be driven to input ports of the microcomputer corresponding to the functions not equipped for the second grade in the electronic control unit of the second grade.

Accordingly, the signal representing that the control target, i.e. each functional section of the automotive vehicle is not to be driven is substantially constantly or periodically or in-use inputted by the input circuit to the input port of the microcomputer corresponding to the function not provided for the second grade. Thus, in the case where a certain function is not provided depending on the specification of the automotive vehicle, software installed on the microcomputer can treat a signal from this input port as a signal for not driving the normally equipped functional section in program processing (an output port of the microcomputer corresponding to the control target not to be driven may be set to an open-state) if the signal representing that this functional section is not to be driven is constantly inputted to the input port corresponding to this function. Specifically, even if specifications differ, the program processing can be performed on the assumption that the port assignment is same without changing the number of input ports (and the number of output ports) of the microcomputer by setting the input port unused for the control of the control target as a so-called empty port. Therefore, microcomputers and softwares can be standardized without individually developing microcomputers (hardwares such as microcomputers and memories) and softwares to be installed on the microcomputers according to differences in specifications, which in turn enables development costs and development lead times required for these developments or management costs to be reduced.

According to a preferred development of the above construction, calculations preferably are performed for controlling the control target by executing the specified (predetermined or predeterminable) program, and the signal representing that the control target is not to be driven is constantly or periodically or in-use inputted by the input circuit to the input port of the microcomputer corresponding to the function not equipped for the second grade in the electronic control unit of the second grade not provided with some of the functions provided in automotive vehicles of the first grade.

Preferably, the input circuit is preferably a pull-up circuit for pulling up the input port. According to this, the input circuit serves as the pull-up circuit for pulling up the input port.

Accordingly, since the input circuit serves as the pull-up circuit for pulling up the input port, the circuit for substantially constantly or periodically or in-use inputting the signal representing that the control target is not to be driven to the input port can be easily realized by this pulling-up.

Furthermore, it is preferable that a power supply circuit for supplying power to the microcomputer is further provided, and that the pull-up circuit comprises or is a circuit for connecting the input port with a plus side of the power supply circuit via a specified resistor. According to this, the pull-up circuit serves as a circuit for connecting the input port with the plus side of the power supply circuit via the specified resistor.

Accordingly, since the pull-up circuit connects the input port with the plus side of the power supply circuit via the specified resistor, the pulling-up can be easily realized using a simple circuit construction.

Further preferably, the microcomputer used for the first grade vehicles and for the second grade vehicles have the same numbers of input ports and/or output ports.

Most preferably, one or more output circuits of the microcomputer are kept connected with one or more respective output ports, so that these output ports preferably are set to an open-state by letting the microcomputer output no control signals from these output ports.

According to the invention, there is further provided a control method for an electronic control unit, particularly according to the above construction or a preferred embodiment thereof, equipped with at least one microcomputer, the control method performing calculations for controlling control targets by executing a specified program, comprising:
providing a plurality of grades including a first grade and a second grade not equipped with some of functions equipped in automotive vehicles of the first grade, and
performing an empty port processing by inputting a signal representing that the control target is not to be driven to an input port of the microcomputer corresponding to the function not equipped for the second grade in the electronic control unit of the second grade.

In other words, in the electronic control unit for the second grade, an empty port processing is applied to the one or more input ports of the microcomputer corresponding to the function not equipped for the second grade so that one or more input signals to these input ports are in use or substantially constantly specified (predetermined or predeterminable) signals such as H-signals. Thus, the microcomputer does not control the output systems corresponding to the input systems connected with the input ports, and the output ports of these output systems are all in an open-state.

According to a preferred embodiment of the invention, the step of inputting a signal is performed by means of a pull-up circuit for pulling up the input port.

Preferably, the control method further comprises a step of supplying power to the microcomputer by means of a power supply circuit,
wherein in the step of inputting a signal the input port is connected with a plus side of the power supply circuit via a specified resistor.

Further preferably, the control method further comprises a step of keeping one or more output circuits of the microcomputer connected with one or more respective output ports, so that these output ports preferably are set to an open-state by letting the microcomputer output no control signals from these output ports.

According to the invention, there is further provided a computer program product, in particular embodied on a computer-readable storage medium, as a signal and/or as a data stream, comprising computer readable instructions which, when loaded and executed on a suitable system performs the steps of a control method according to the invention or a preferred embodiment thereof.

These and other objects, features and advantages of the present invention will become more apparent upon reading of the following detailed description of preferred embodiments and accompanying drawings. It should be understood that even though embodiments are separately described, single features thereof may be combined to additional embodiments.
FIG. 1 is a circuit block diagram showing a circuit construction of an electronic control unit for high grade vehicles according to one embodiment of the invention,
FIG. 2 is a circuit block diagram showing a circuit construction of an electronic control unit for low grade vehicles according to one embodiment of the invention,
FIGS. 3(a) and 3(b) are diagrams showing controls of functional sections by a microcomputer in the case where provided functions differ, wherein FIG. 3(b) is a block diagram of the electronic control unit for high grade vehicles and FIG. 3(b) is a block diagram of the electronic control unit for low grade vehicles,
FIGS. 4(a) and 4(b) are diagrams showing exemplary actually mounted electronic control units corresponding to the respective electronic control units shown in the block diagrams of FIGS. 3(a) and 3(b),
FIG. 5 is a diagram showing one modification of the electronic control unit for low grade vehicles shown in FIG. 3(b), and
FIG. 6 is a flow chart showing an exemplary operation of controlling the respective functions in a high or low grade vehicles by a microcomputer (software executed by the microcomputer) of the electronic control unit according to the embodiment.

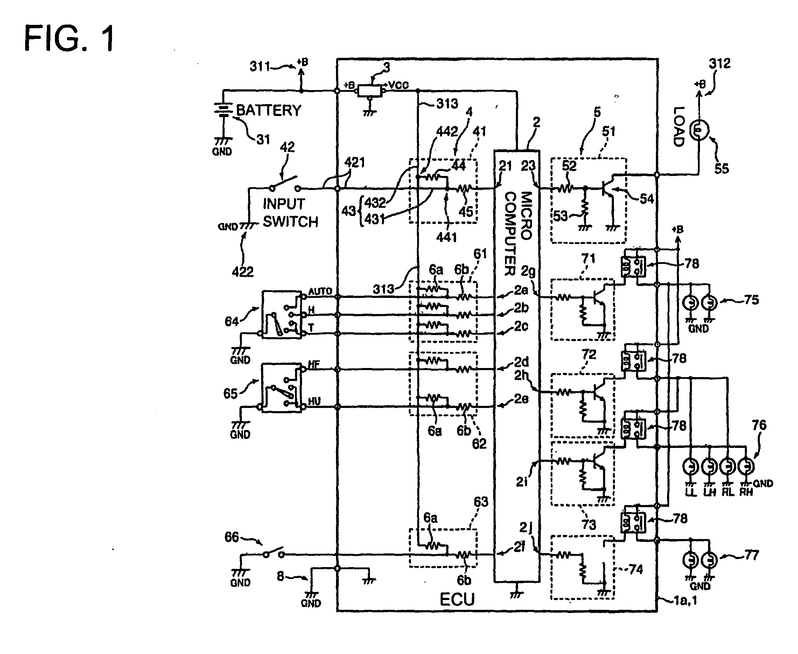

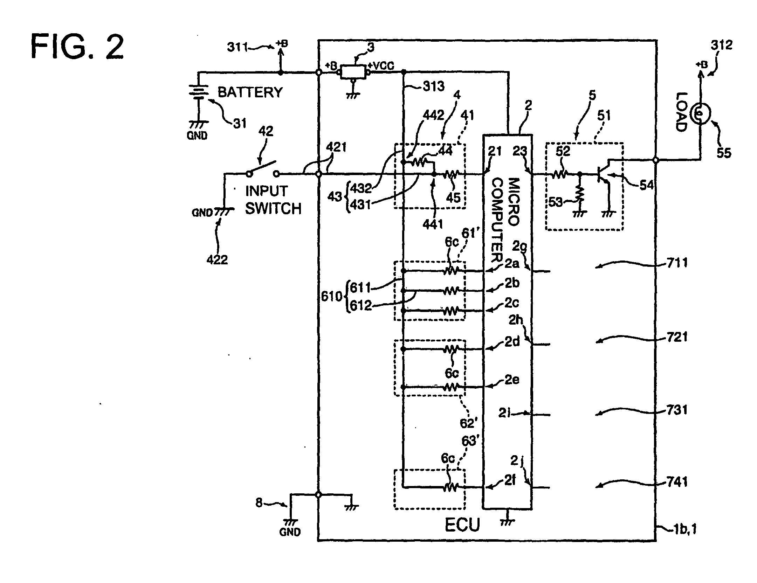

FIGS. 1 and 2 are circuit block diagrams showing circuit constructions of electronic control units 1 according to one preferred embodiment of the present invention. The electronic control unit 1 particularly is to be installed at a specified (predetermined or predeterminable) position of various automotive vehicles such as passenger cars and autotrucks for controlling various functions of the automotive vehicle, e.g. controlling various electric wiring parts called body parts. The electronic control unit 1 receives at least one input signal from an input system (various input systems) for the various functions and/or controls the operation of an output system (various output systems) for the various functions particularly in accordance with this input signal. The electronic control unit 1 is graded for vehicles having higher grades, i.e. high grade vehicles and vehicles having lower grades, i.e. low grade vehicles according to the functions provided in automotive vehicles. The vehicles having different grade particularly have different optional equipment and/or functions, the high (or higher) grade vehicles having a higher number of optional equipment and/or functions and/or more complex optional equipment and/or functions as compared to low (or lower) grade vehicles. In other words, the control functions of electronic control units 1a for high grade vehicles are more extensive as compared to electronic control units 1b for low grade vehicles, particularly electronic control units 1b for low grade vehicles lack one or more functions the electronic control units 1a for high grade vehicles have.

FIG. 1 shows an electronic control unit 1a for high grade vehicles, and FIG. 2 shows an electronic control unit 1b for low grade vehicle. The electronic control unit 1a for high grade vehicles may have one or more of the following: a lamp control function for controllably turning on and off lamps such as taillights, headlights and/or fog lamps; a courtesy control function for controllably turning on and off interior lights and/or an ignition key illumination as a door, a trunk or the like is opened and closed; a door lock control function for controllably locking or unlocking doors, a CAN/LIN control function for controlling communication with other electronic control units via a CAN (controller area network) and/or a LIN (local interconnect network); and other control functions for controllably turning on and off a parking brake warning lamp, seat belt warning lamps and the like.

On the other hand, the electronic control unit 1b for lower grade vehicles particularly lacks some of a plurality of control functions of the electronic control unit 1a for high grade vehicles. In this embodiment, the function control lacking in the electronic control unit 1b for low grade vehicles is assumed to be, for example, the lamp control function.

Here, the control functions common to the electronic control units 1 and 1b of the different grades are first described. In this embodiment, the courtesy control function is described as an example of the common control functions. As shown in FIGS. 1 and 2, the electronic control units 1a, 1b are each provided with a microcomputer 2, a power supply circuit 3, one or more input circuits 4 and one or more output circuits 5.

The microcomputer 2 governs the body controls of the automotive vehicle, and includes a ROM storing various control programs on the body controls, a RAM for temporarily saving various data, and a CPU (central processing unit) for reading the control program from the ROM and executing it.

The power supply circuit 3 supplies power to the microcomputer 2 and also supplies power as one or more input signals (preferably H-signal, L-signal to be described later) to the microcomputer 2 in accordance with one or more switching operations of the various input systems. The power supply circuit 3 converts, for example, an output voltage from a battery (vehicle-mounted battery) 31 into a voltage suitable for the operation of the microcomputer 2 and outputs the resulting voltage as a power supply voltage (+Vcc). It should be noted that preferably the battery 31 directly supplies power to loads of various output systems to be described later. In other words, wiring lines at positions "+B" shown by reference numerals 311 and 312 are or may be, for example, connected with each other, so that power can be directly supplied to the loads (interior lights 55 to be described later) without via the electronic control unit 1.

The input circuits 4 output the one or more input signals of the various input systems to the microcomputer 2. The input circuits 4 preferably include a specified (predetermined or predeterminable) number of input circuits for the various input systems. Here, it is assumed that a courtesy input circuit 41 as an input circuit for the courtesy control function is provided as one of the input circuits of the various input systems. The courtesy input circuit 41 is connected with a courtesy switch 42 as an input switch provided at a suitable position of the automotive vehicle outside the electronic control unit 1a and corresponding to the courtesy input circuit 41.

The courtesy input circuit 41 particularly includes a wiring line 43, a pull-up resistor 44, a noise resistor 45 and the like. The wiring line 43 is comprised of a wiring line 431 in the courtesy input circuit 41 in a wiring line 421 connecting the microcomputer 2 and the courtesy switch 42, and a wiring line 432 in the courtesy input circuit 41 in a wiring line 313 from the power supply circuit 3, and the wiring lines 431, 432 are connected via the pull-up resistor 44. In other words, a circuit construction is such that the pull-up resistor 44 preferably is respectively connected with the wiring lines 431, 432 at nodes 441, 442.

The pull-up resistor 44 is for pulling up the input signal from the courtesy switch 42 to the microcomputer 2. This pulling-up is to pull the voltage of the input signal to an input port 21 up to a specified (predetermined or predeterminable) voltage (+Vcc) by connecting a certain input port (input terminal) of the microcomputer 2, here the input port 21 with a plus side of the power supply, i.e. the above output +Vcc of the power supply circuit 3 via a suitable resistor, i.e. the pull-up resistor 44.

In this preferred construction, the signal voltage is pulled up using the pull-up resistor 44 to input a high potential voltage signal to the input port when the courtesy switch 42 is off as shown. The voltage signal in this case is assumed to a high signal (H-signal). On the other hand, when the courtesy switch 42 is on, the courtesy input circuit 41, i.e. the wiring line 431 is connected with a ground (GND) 422, whereby a low signal (L-signal) lower than the above H-signal is inputted to the input port 21. In this way, the H-signal or L-signal is inputted to the input port 21 as the courtesy switch 42 is turned on or off.

The noise resistor 45 is a so-called noise removing resistor for preventing noise input to the microcomputer 2 resulting from the switching operation of the courtesy switch 42 and the like and is connected, for example, with the wiring line 431 between the node 441 and the input port 21. Although it is preferable to include the noise resistor 45 in this way, this resistor 45 may be not necessarily provided.

The output circuits 5 output signals to the various output systems for controlling the operations of the various output systems in accordance with one or more control signals from the microcomputer 2. The output circuits 5 include a courtesy output circuit 51 as an output circuit for the above courtesy control function. The courtesy output circuit 51 preferably includes a first resistor 52, a second resistor 53 and a transistor 54 (including wiring lines of these), thereby amplifying a control signal outputted from an output port (output terminal) of the microcomputer 2, e.g. from an output port 23 and outputting this amplified signal to a load corresponding to the courtesy output circuit 51, for example, to the interior lights 55 as a signal used for controllably turning, for example, the interior lights 55 on or off. Although the weak control signal outputted from the microcomputer 2 is amplified by the courtesy output circuit 51 here, the present invention is not limited thereto and the operation of the load (interior lights 55) may be directly controlled by a control signal from the microcomputer 2. I this case, the output port 23 of the microcomputer 2 and the load may be directly connected without providing the courtesy output circuit 51.

When the courtesy switch 42 is turned on in the courtesy control function provided with such input circuits 4 and output circuits 5, the microcomputer 2 controllably turns the interior lights 55 on upon judging that the door of the automotive vehicle was opened. Further, when the courtesy switch 42 is turned off, the microcomputer 2 controllably turns the interior lights 55 off after a specified (predetermined or predeterminable) time, for example, after about 10 seconds after the courtesy switch 42 is turned off (the interior lights 55 are kept on for about 10 seconds after the courtesy switch 42 is turned off) upon judging that the door of the automotive vehicle was closed.

Next, differences in the control functions of the electronic control units 1 for high grade vehicles and low grade vehicles, i.e. the electronic control unit 1a preferably provided with the lamp control function and the electronic control unit 1b preferably not provided with the lamp control function are described. First, the case of the electronic control unit 1a is described.

As shown in FIG. 1, first to third lamp input circuits 61 to 63 corresponding to the courtesy input circuit 41 are connected as the input circuits 4 with input ports 2a to 2f of the microcomputer 2 of the electronic control unit 1a. A light switch 64 (headlight switch and/or taillight switch), a dimmer switch 64 and at least one fog lamp switch 66 are respectively connected with these first to first lamp input circuits 61 to 63. Further, first to fourth lamp output circuits 71 to 74 corresponding to the courtesy output circuit 5 are connected as the output circuits 5 with output ports 2g to 2j of the microcomputer 2. Taillights 75, headlights 76 and/or at least one fog lamp 77 as the lamps and a plurality of relays 78 disposed at suitable positions of these lights, lamps and first to fourth lamp output circuits 71 to 74 are connected with the first to fourth lamp output circuits 71 to 74.

The light switch 64 is a switch for turning the taillights 75 (T) and/or headlights 76 (H) on and off or automatically turning these lights on and off. The dimmer switch 65 is a switch (dimmer) for adjusting or controlling the brightness of the headlights 76, for example, between two levels, i.e. high level (H) and low level (L). The fog lamp switch 66 is a switch for turning the fog lamp(s) 77 on and off. Pull-up resistors 6a and noise resistors 6b in the first to third lamp input circuits 61 to 63 correspond to the above pull-up resistor 44 and noise resistor 45.

When the light switch 64, dimmer switch 65 or fog lamp switch 66 is off in such a construction, an H-signal is inputted to the input ports 2a to 2f of the microcomputer 2 corresponding to the switch(es) in an off-state. When any of these switches is on, an L-signal is inputted to the input port 2a to 2f of the microcomputer 2. In the microcomputer 2, a control signal is outputted to any one or all of the first to fourth lamp output circuits 71 to 74 in accordance with the inputted H-signal or L-signal, thereby controlling the operation of the taillights 75 and the headlights 76 or the fog lamp 77 via the corresponding relay 78.

Next, the case of the electronic control unit 1b not provided with the lamp control function is described. As shown in FIG. 2, in the electronic control unit 1b for low grade vehicles not provided with the lamp control function (input and output systems in the lamps) different from the one for high grade vehicles, "empty port processing" is applied to the input ports 2a to 2f unused in the microcomputer 2 and corresponding to this lamp control function. The empty port processing is for pulling the voltage up at a certain input port of the microcomputer 2 in the substantially same manner as above, so that input signals to this input port are constantly H-signals. In other words, the circuit construction is set such that a signal (H-signal) representing that the control target is not to be driven is substantially constantly (or when in use or activated) inputted to the certain input port. Specifically, the respective input ports 2a to 2f are connected with the plus side +Vcc of the power supply circuit 3 via pull-up resistors 6c to pull up the respective input ports 2a to 2f. In other words, there can be obtained a state where input voltages to the respective input ports 2a to 2f are pulled up to +Vcc.

In this way, the same H-signal as in the case where the respective switches 64 to 66 are turned off are constantly inputted to the respective input ports 2a to 2f (signals to be inputted to the respective input ports 2a to 2f are constantly fixed as H-signals). This can be also said that the microcomputer 2 recognizes (detects) the connection of the respective switches 64 to 66 constantly kept off with the respective input ports 2a to 2f. Accordingly, the respective input ports 2a to 2f become, so to speak, empty ports irrespective of the on/off-state of the input switches, i.e. with which no input systems are connected (which are not used by any input system). This can be expressed as the empty port processing.

The input circuits 4 in the electronic control unit 1b include first to third empty port circuits 61' to 63' formed by performing the empty port processing (pull-up processing) to the respective input ports corresponding to the first to third lamp input circuits 61 to 63 in this way together wit the courtesy input circuit 41. The respective first to third empty port circuits 61' to 63' are described, taking the first empty port circuit 61' as an example. The first empty port circuit 61' includes, in addition to the above pull-up resistor 6c, a wiring line 610 comprised of a wiring line 611 in the first empty port circuit 61' in the wiring line 311 from the power supply circuit 3 and three wiring lines 612 connecting the wiring line 611 and the input ports 2a, 2b and 2c. The pull-up resistor 6c is connected with the wiring line 612.

The input circuits 4 may perform pull-up processing to change or switch among the plurality of lamp input circuits and empty port circuits, particularly to change from the first to third lamp input circuits 61 to 63 to the first to third empty port circuits 61' to 63' when a user, for example, actually switches a specified changeover switch, e.g. a jumper pin as the empty port processing. Instead of switching the state in this way, a printed circuit board formed with a circuit pattern provided with the pulled-up empty port circuits may be used, particularly may be produced beforehand at the time of producing the electronic control unit 1. At any rate, the input circuits 4 are constructed to be able to perform the empty port processing to the specified one(s) of a plurality of input ports of the microcomputer 2. In the case of using part or all the input ports as ports to which signals for driving the respective functional sections are inputted, particularly there is no empty port circuit as in the electronic control unit 1a shown in FIG. 1.

As described above, in the electronic control unit 1b, the empty port processing is applied to the input ports 2a to 2f of the microcomputer 2 and, hence, input signals to these input ports 2a to 2f are constantly H-signals. Thus, the microcomputer 2 does not control the output systems corresponding to the input systems connected with the input ports 2a to 2f, and the output ports 2g to 2j of these output systems are all in an open-state as shown by reference numerals 711, 721, 731 and 741. In other words, the first to fourth lamp output circuits 71 to 74, the respective relays 78 and/or the respective lights 75 to 77 are not connected with the output ports 2g to 2j (originally the output systems of these lamps are not installed in the electronic control unit 1b for low grade vehicles). As described above, the output circuits 5 in the electronic control unit 1b are not provided with output circuits corresponding to at least part of the empty port circuits, particularly of the first to third empty port circuits 61' to 63'.

It may not be always necessary that the output circuits 5 include no output circuits at the output ports corresponding to the empty port circuits. For example, the output circuits may be provided at the output ports and may be electrically separated from and connected with the microcomputer 2 by switching a specified (predetermined or predeterminable) changeover switch, e.g. a jumper switch. In this construction, a state where the output circuits are separated corresponds to the above open-state. Instead of performing the above switching operation, the output circuits may be kept connected with the output ports. In other words, these output ports may be set to the above open-state by letting the microcomputer 2 output no control signals from these output ports. In this case, the output ports can be said to be open regardless of the presence or absence of the output circuits.

It should be noted that the electronic control units 1a, 1b preferably may have circuit constructions including a ground circuit 8 and connected to ground (GND). Further, as shown in FIGS. 1 and 2, the microcomputer 2, power supply circuit 3, courtesy output circuit 51 and/or at least part of first to fourth lamp output circuits 71 to 74 may be connected with the ground. Furthermore, the courtesy input circuit 41, courtesy output circuit 51, at least part of first to third lamp input circuits 61 to 63, at least part of first to fourth lamp output circuits 71 to 74 and/or at least part of first to third empty port circuits 61' to 63' are or may be divided, assuming that the input circuits 4 and output circuits 5 are partial circuits corresponding the respective ports, i.e. circuits at positions surrounded by dotted lines in FIGS. 1 and 2, but such circuit division may not actually be made.

If the electronic control units 1a, 1b shown in FIGS..1 and 2 are compared, the microcomputers 2 used for high grade vehicles and for low grade vehicles preferably have the same numbers of input ports and output ports. Thus, even if functions or circuit board sizes differ like the electronic control units 1a, 1b, the substantially same microcomputers or the microcomputers having the substantially same standards can be used, i.e. the microcomputers to be used can be standardized.

Since the numbers of input ports and output ports preferably can be same, i.e. the port assignment can be same, software common to high grade vehicles and low grade vehicles can be used.

The electronic control unit 1b can be formed from the electronic control unit 1a by setting the input circuits such that the input ports of the input systems in the functions not provided for low grade vehicles are pulled up and providing no output circuits of the output systems corresponding to these input systems. Thus, the overall circuit constructions of the electronic control units 1a, 1b can be substantially same, which in turn enables not only the microcomputers, but also the electronic control units equipped with the microcomputers to be also standardized.

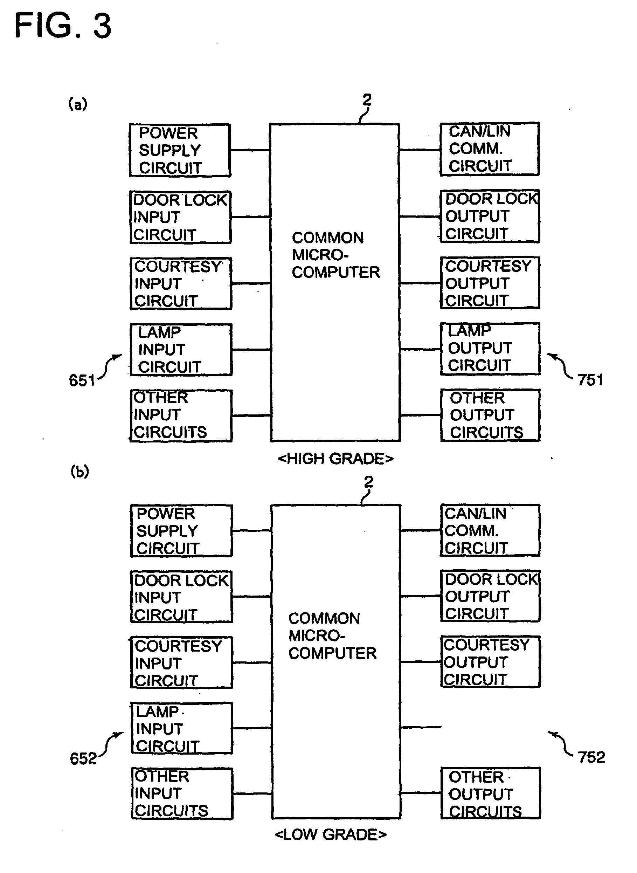

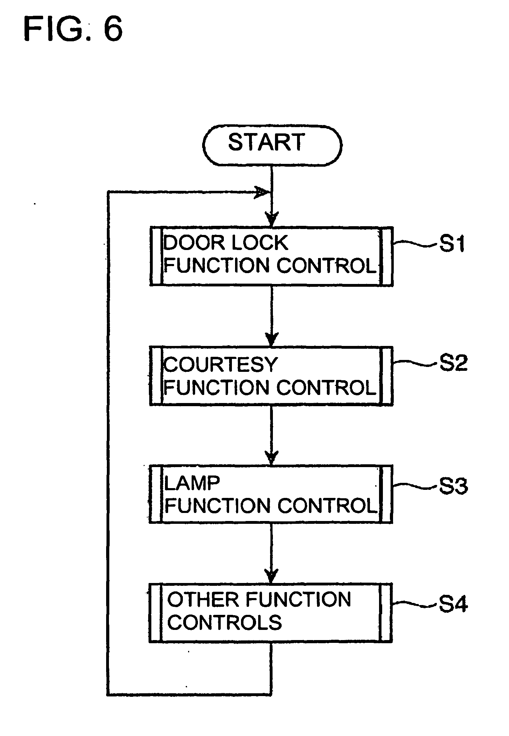

FIG. 6 is a flow chart showing an exemplary operation of controlling the respective functions in a high or low grade vehicle by the microcomputer (software executed on the microcomputer) of the electronic control unit according to this embodiment. The software executed in this flow chart preferably is the one commonly used (the same) for the high and low grades. This flow chart describes the controls of the respective functional sections (function controls) by the microcomputer 2 in the respective cases of high grade vehicles and low grade vehicles provided with the functions, for example, as shown in FIGS. 3(a) and 3(b) using this common software.

First, the microcomputer 2 (software) performs a door lock function control to control the driving of a door lock motor or door unlock motor for locking or unlocking the doors upon the receipt of a signal, for example, from a door lock switch or door unlock switch (Step S1). Subsequently, the microcomputer 2 performs a courtesy function control to controllably turn the interior lights 55 and ignition key illumination on upon the receipt of a signal from the courtesy switch (Step S2). Subsequently, the microcomputer 2 performs a lamp function control to control the driving of head/taillight relays and/or fog lamp relay, for example, upon the receipt of a signal from head/tail light switch or fog lamp switch (Step S3) and further performs other function controls to controllably turn the parking brake warning lamp and/or seatbelt warning lamp, for example, upon the receipt of signals from a parking brake switch and seatbelt switch (Step S4). The processings from Step S1 to Step S4 preferably are constantly and/or repeatedly performed.

In the above Step S3, a lamp input circuit 651 (corresponding to the first to third lamp input circuits 61 to 63) and/or a lamp output circuit 751 (corresponding to the first to fourth lamp output circuits 71 to 74) preferably are equipped in the case of high grade shown in FIG. 3(a), and the microcomputer 2 performs the lamp function control.

On the other hand, in the case of low grade shown in FIG. 3(b), the software is executed as in the case of high grade although the lamp functions, i.e. the lamp input circuit 651 and/or lamp output circuit 751 are not equipped. Specifically, since all the input ports of the microcomputer 2 are pulled up, for example, to +Vcc of the power supply circuit in the electronic control unit, thereby applying the empty port processing to the lamp input circuits as shown by reference numeral 652 for low grade, the states of all the lamp input switches are equivalent to an off-state. The software performs the same program processing for this off-state as in the case of the "off-state" for high grade (treated as the same "off"-signal in the program processing). In other words, the lamps are not controlled for low grade as a result. In conformity with the empty port processing shown by reference numeral 652, the output port of the lamp output circuit is set to an open-state (state where no lamp output circuit is provided) as shown by reference numeral 752. Thus, the microcomputer 2 and the software installed thereon may be basically so specified (device construction and program) as to be able to control all the functions for high grade vehicles (assuming the full function use) and, in the case of using these for low grade vehicles, the empty port processing 652 may be applied to the input circuits of the functions not provided and the output circuits of the functions not provided may be set to the open-state.

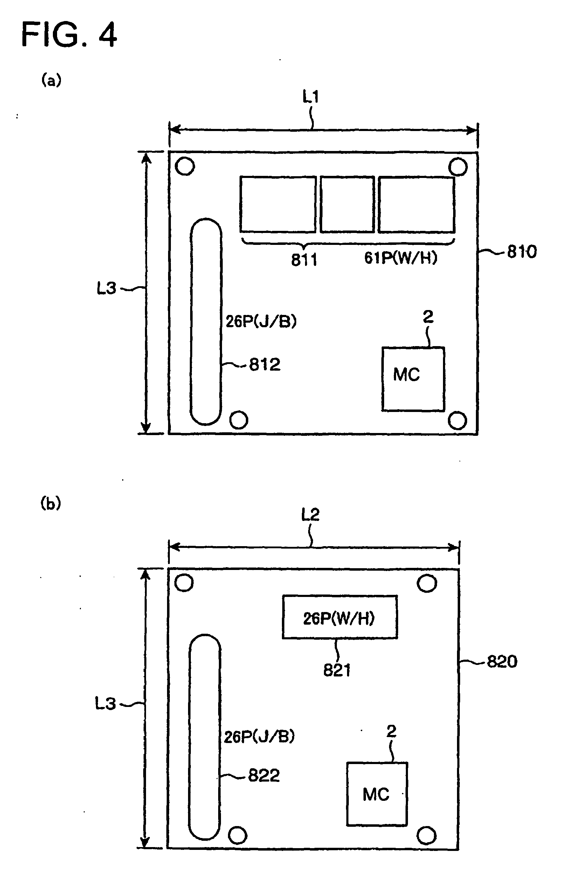

FIGS. 4(a) and 4(b) show exemplary actually mounted electronic control units corresponding to FIGS. 3(a) and 3(b). As shown in FIGS. 4(a) and 4(b), in an electronic control unit 820 for low grade vehicles, a connector 821 for connecting a wiring harness (W/H) corresponding to this low grade specification (functions) is smaller than a connector 811 for connecting a wiring harness in an electronic control unit 810 for high grade vehicles, for example, because having a smaller number of pins (or ports: P), i.e. 26 P as against 61 P (junction blocks (J/B) 812, 822 preferably are of the substantially same size by both having, for example, 26 P). Thus, the sizes of the circuit boards differ by having different lengths L1, L2 of the corresponding sides. However, even if the functions and sizes of the electronic control units differ as above, the microcomputer 2 and software can be commonly used by using the electronic control units having the construction of this embodiment.

As described above, according to the embodiment of the present invention, the electronic control unit 1 (1a, 1b) equipped with the microcomputer 2 for performing calculations for controlling the control targets by executing the specified program has a plurality of grades including the high grade (first grade) and the low grade (second grade) not provided with some of the functions provided in automotive vehicles of the high grade, and is provided with the input circuits for constantly inputting signals representing that the above control targets are not to be driven to the input ports of the microcomputer 2 corresponding to the functions not provided for the low grade, e.g. the first to third empty port circuits 61' to 63' (or input circuits 4 including first to third empty port circuits 61' to 63').

Thus, by the first to third empty port circuits 61' to 63', the signals (H-signals) preferably representing that the control targets, i.e. the respective functional sections of the automotive vehicle are not to be driven are constantly inputted to the input ports of the microcomputer 2 corresponding to the functions not provided for the low grade, e.g. to the input ports 2a to 2f. Therefore, in the case where a certain function is not provided depending on the specification (grade) of the automotive vehicle, the software installed on the microcomputer 2 can treat the signal from the input port corresponding to this function as a signal not to drive the normally equipped functional section in the program processing if the signal representing that this functional section is not to be driven is constantly inputted to this input port. The output ports of the microcomputer 2 corresponding to the control targets not to be driven, e.g. the output ports 2g to 2f may be set to the open-state. Specifically, even if the specifications of automotive vehicles differ such as between the high grade and low grade, the program processing can be performed on the assumption that the port assignment is same without changing the number of input ports (and the number of output ports) by setting the input ports unused for the control of the control targets as so-called empty ports. Therefore, the microcomputers and softwares preferably can be substantially standardized without individually developing the microcomputers (hardwares such as the microcomputers and memories) and/or softwares to be installed on the microcomputers according to differences in specifications, which in turn enables development costs and development lead times required for these developments or part number management costs for the microcomputers and the like to be reduced.

Since the above first to third empty port circuits 61' to 63' serve as circuits (expressed as pull-up circuits) for pulling up the input ports, i.e. the input ports 2a to 2f, the circuits for constantly inputting the signals representing that the control targets are not to be driven to the input ports can be easily realized by performing this pull-up processing.

Since the above pull-up circuits (first to third empty port circuits 61' to 63') serve as circuits for connecting the input ports with the plus side (+Vcc) of the power supply circuit 3 via the specified (predetermined or predeterminable) resistors, e.g. the pull-up resistors 6c shown in FIG. 2, this pulling-up can be easily realized using a simple circuit construction.

Accordingly, to enable the use of common microcomputer and/or software in electronic control units for vehicles having different specifications, an electronic control unit equipped with a microcomputer for performing calculations for controlling control targets by executing a specified (predetermined or predeterminable) program has a plurality of grades including a first grade and a second grade not provided with some of functions provided in automotive vehicles of the first grade, and is provided with input circuits for constantly inputting signals representing that the control targets are not to be driven to input ports of the microcomputer corresponding to the functions not provided for the second grade in the electronic control unit of the second grade.

Various constructional additions and changes can be made without departing from the scope and spirit of the present invention. For example, the present invention can be modified as follows.
(A) In the foregoing embodiment, the input signal to the input port is high (H-signal) if the input switch, e.g. the courtesy switch off, is low (L-signal) if the input switch is off, and is high (H-signal) if the empty port (pull-up) processing is applied to the input port. However, this high/low definition of the input signal may be reversed.
(B) The circuit construction for pulling up the input ports is not limited to the one in the foregoing embodiment. In short, any circuit construction may be adopted provided that the signals representing that the control targets are not to be driven (e.g. H-signals) are constantly inputted.

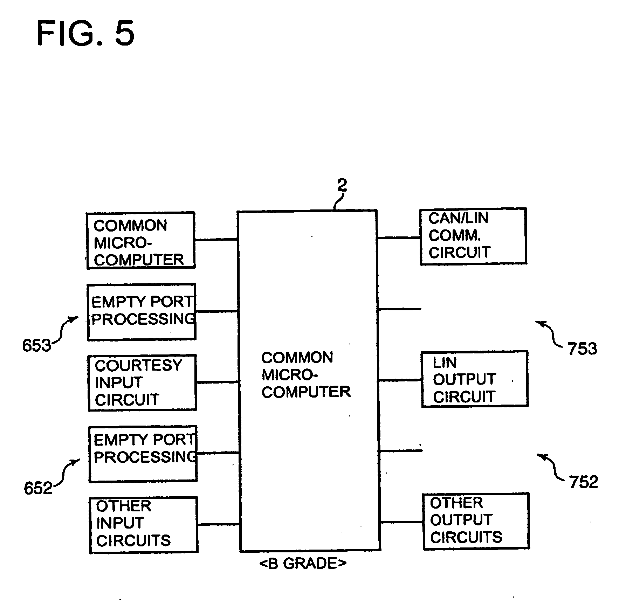

There are two kinds of electronic control units having the high grade (upper grade) and low grade (lower grade). For example, as shown in FIG. 5, the empty port processing (see reference numeral 653) may be applied, for example, to the door lock input circuit in addition to the empty port processing shown by reference numeral 652 and the output port corresponding to the door lock output circuit is set to the open-state (see reference numeral 753) in the electronic control unit shown in FIG. 3(b). In other words, an electronic control unit in which the empty port processing is applied to the one or more input ports corresponding to a plurality of kinds of arbitrary functional sections and the corresponding output ports are set in the off-state may serve as a third grade, i.e. B grade (basic grade) (the case of the high grade is similarly not limited to the one shown in FIG. 3(a) and arbitrary kinds of input circuits and output circuits may be provided).

### LIST OF REFERENCE NUMERALS

- 1, 1a, 1b: electronic control unit
- 2: microcomputer
- 21: input port
- 23: output port
- 2a to 2f: input port (specified input port)
- 2g to 2j: output port
- 3: power supply circuit
- 31: battery
- 4: input circuit
- 41: courtesy input circuit
- 42: courtesy switch
- 43,610: wiring line
- 44: pull-up resistor
- 45: noise resistor
- 5: output circuit
- 51: courtesy output circuit
- 55: interior light
- 61 to 63, 651...: first to third lamp input circuit
- 61' to 63' ...: first to third empty port circuits (input circuit)
- 64: light switch
- 65: dimmer switch
- 66: fog lamp switch
- 6a: pull-up resistor
- 6b: noise resistor
- 6c: pull-up resistor (resistor)
- 71 to 74, 751: first to fourth lamp output circuits
- 75: taillight
- 76: headlight
- 77: fog lamp
- 78: relay
- 8: ground circuit

## Claims

1. An electronic control unit (1) equipped with at least one microcomputer (2) for performing calculations for controlling control targets by executing a specified program, comprising:
a plurality of grades including a first grade and a second grade not equipped with some of functions equipped in automotive vehicles of the first grade, and
the electronic control unit is **characterised in that** it further comprises
an input circuit (4; 61'-63') for substantially constantly inputting a signal representing that the control target is not to be driven to an input port (2a-2f) of the microcomputer (2) corresponding to the function not equipped for the second grade in the electronic control unit (1b) of the second grade.

2. An electronic control unit according to claim 1, wherein the input circuit (4; 61'-63') is a pull-up circuit for pulling up the input port (2a-2f).

3. An electronic control unit according to claim 2, further comprising a power supply circuit (3) for supplying power to the microcomputer (2),
wherein the pull-up circuit (4; 61'-63') comprises a circuit for connecting the input port (2a-2f) with a plus side (+Vcc) of the power supply circuit (3) via a specified resistor (6c).

4. An electronic control unit according to one or more of the preceding claims, wherein the microcomputer (2) used for the first grade vehicles and for the second grade vehicles have the same numbers of input ports (21; 2a-2f) and/or output ports (23; 2g-2j).

5. An electronic control unit according to one or more of the preceding claims, wherein one or more output circuits (5) of the microcomputer (2) are kept connected with one or more respective output ports (2g-2j), so that these output ports (2g-2j) preferably are set to an open-state (711, 721, 731 and 741) by letting the microcomputer (2) output no control signals from these output ports (2g-2j).

6. A control method for an electronic control unit (1) equipped with at least one microcomputer (2), the control method performing calculations for controlling control targets by executing a specified program, comprising:
providing a plurality of grades including a first grade and a second grade not equipped with some of functions equipped in automotive vehicles of the first grade, and
performing an empty port processing by inputting a signal representing that the control target is not to be driven to an input port (2a-2f) of the microcomputer (2) corresponding to the function not equipped for the second grade in the electronic control unit (1 b) of the second grade.

7. A control method according to claim 6, wherein the step of inputting a signal is performed by means of a pull-up circuit (4; 61'-63') for pulling up the input port (2a-2f).

8. A control method according to claim 6 or 7, further comprising a step of supplying power to the microcomputer (2) by means of a power supply circuit (3),
wherein in the step of inputting a signal the input port (2a-2f) is connected with a plus side (+Vcc) of the power supply circuit (3) via a specified resistor (6c).

9. A control method according to one or more of the preceding claims 6 to 8, further comprising a step of keeping one or more output circuits (5) of the microcomputer (2) connected with one or more respective output ports (2g-2j), so that these output ports (2g-2j) preferably are set to an open-state (711, 721, 731 and 741) by letting the microcomputer (2) output no control signals from these output ports (2g-2j).

10. A computer program product comprising computer readable instructions which, when loaded and executed on a suitable system performs the steps of a control method according to one or more of the preceding claims 6 to 9.

## Patentansprüche

1. Eine elektronische Steuereinheit (1), die mit mindestens einem Mikrocomputer (2) ausgestattet ist, um Berechnungen durchzuführen zur Steuerung von Steuerzielen durch die Ausführung eines spezifischen Programms, die Folgendes umfasst:
eine Vielzahl von Klassen (*grades*), die eine erste Klasse umfasst und eine zweite Klasse, die mit einer gewissen Anzahl von Funktionen, mit denen Kraftfahrzeuge der ersten Klasse ausgerüstet sind, nicht ausgestattet ist, und
wobei die elektronische Steuereinheit **dadurch gekennzeichnet ist, dass** sie des Weiteren Folgendes umfasst:
eine Eingangsschaltung (4; 61'-63') zur im Wesentlichen konstanten Eingabe eines Signals, das darstellt, dass das Steuerziel nicht in den Eingangsport (2a-2f) des Mikrocomputers (2) geleitet werden soll, der einer Funktion entspricht, mit der eine zweite Klasse nicht ausgerüstet ist, in die elektronische Steuereinheit (1 b) der zweiten Klasse.

2. Eine elektronische Steuereinheit nach Anspruch 1, wobei die Eingangsschaltung (4; 61'-63') eine Pull-up-Schaltung ist, zur Anhebung des Eingangsports (2a-2f).

3. Eine elektronische Steuereinheit nach Anspruch 2, die des Weiteren eine Stromversorgungsschaltung (3) umfasst, um den Mikrocomputer (2) mit Strom zu versorgen,
wobei die Pull-up-Schaltung (4; 61'-63') eine Schaltung umfasst, um den Eingangsport (2a-2f) mit einer Plusseite (+Vcc) der Stromversorgungsschaltung (3) über einen bestimmten Widerstand (6c) zu verbinden.

4. Eine elektronische Steuereinheit nach einem oder mehreren der vorhergehenden Ansprüche, wobei der für die Fahrzeuge der ersten Klasse und für die Fahrzeuge der zweiten Klasse verwendete Mikrocomputer (2) die gleiche Anzahl an Eingangsports (21; 2a-2f) und/oder Ausgangsports (23; 2g-2j) aufweist.

5. Eine elektronische Steuereinheit nach einem oder mehreren der vorhergehenden Ansprüche, wobei eine oder mehrere Ausgangsschaltungen (5) des Mikrocomputers (2) mit einem oder mehreren entsprechenden Ausgangsports (2g-2j) verbunden gehalten werden, sodass diese Ausgangsports (2g-2j) vorzugsweise **dadurch** in einen offenen Zustand (711, 721, 731 und 741) versetzt werden, indem man den Mikrocomputer (2) dazu veranlasst, von diesen Ausgangsports (2g-2j) keine Steuersignale (*no control signals*) auszugeben.

6. Ein Steuerverfahren für eine elektronische Steuereinheit (1), die mit mindestens einem Mikrocomputer (2) ausgestattet ist, wobei das Steuerverfahren, durch die Ausführung eines spezifischen Programms, Berechnungen zur Steuerung von Steuerzielen durchführt, das Folgendes umfasst:
bereitstellen einer Vielzahl von Klassen, die eine erste Klasse umfasst und eine zweite Klasse, die mit einer gewissen Anzahl von Funktionen, mit denen Kraftfahrzeuge der ersten Klasse ausgerüstet sind, nicht ausgestattet ist, und
ausführen einer Leeren-Port-Verarbeitung (*empty port processing*), durch die Eingabe eines Signals, das darstellt, dass das Steuerziel nicht in den Eingangsport (2a-2f) des Mikrocomputers (2) geleitet werden soll, der einer Funktion entspricht, mit der eine zweite Klasse nicht ausgerüstet ist, in die elektronische Steuereinheit (1 b) der zweiten Klasse.

7. Ein Steuerverfahren nach Anspruch 6, wobei der Schritt der Signaleingabe mittels einer Pull-up-Schaltung (4; 61'-63') zur Anhebung des Eingangsports (2a-2f) ausgeführt wird.

8. Ein Steuerverfahren nach Anspruch 6 oder 7, der des Weiteren einen Schritt umfasst, bei dem der Mikrocomputer (2) durch eine Stromversorgungsschaltung (3) mit Strom versorgt wird,
wobei im Schritt der Signaleingabe der Eingangsport (2a-2f) mit einer Plusseite (+Vcc) der Stromversorgungsschaltung (3) über einen bestimmten Widerstand (6c) verbunden wird.

9. Ein Steuerverfahren nach einem der Ansprüche von 6 bis 8, das des Weiteren einen Schritt umfasst, bei dem eine oder mehrere Ausgangsschaltungen (5) des Mikrocomputers (2) mit einem oder mehreren entsprechenden Ausgangsports (2g-2j) verbunden gehalten werden, sodass diese Ausgangsports (2g-2j) vorzugsweise in einen offenen Zustand (711, 721, 731 und 741) versetzt werden, indem man den Mikrocomputer (2) dazu veranlasst, von diesen Ausgangsports (2g-2j) keine Steuersignale (*no control signals*) auszugeben.

10. Ein Computerprogrammprodukt, das computerlesbare Anweisungen umfasst, die, wenn sie in ein geeignetes System geladen und ausgeführt werden, die Schritte eines Steuerverfahrens nach einem oder mehreren der vorhergehenden Ansprüche von 6 bis 9 ausführt.

## Revendications

1. Une unité de commande électronique (1) équipée d'au moins un micro-ordinateur (2) pour effectuer des calculs pour commander des cibles de commande en exécutant un programme, comprenant :
une pluralité de classes (grades), comprenant une première classe et une deuxième classe non équipée de quelques fonctions pourvues dans des véhicules automobiles de la première classe, et
l'unité de commande électronique est **caractérisée en ce qu'**elle comprend en outre
un circuit d'entrée (4 ; 61'-63') pour entrer de façon essentiellement constante un signal, représentant le fait que la cible de commande n'est pas à conduire vers une porte d'entrée (2a-2f) du micro-ordinateur (2) correspondant à la fonction non pourvue dans la deuxième classe, dans l'unité de commande électronique (1) de la deuxième classe.

2. Une unité de commande électronique d'après la revendication 1, sachant que le circuit d'entrée (4 ; 61'-63') est un circuit de tirage pour tirer la porte d'entrée (2a-2f) à un niveau haut.

3. Une unité de commande électronique d'après la revendication 2, comprenant en outre un circuit d'alimentation électrique (3) pour l'approvisionnement en énergie du micro-ordinateur (2),
sachant que le circuit de tirage (4 ; 61'-63') comprend un circuit pour raccorder la porte d'entrée (2a-2f) à la borne positive (+Vcc) en passant par une résistance (6c) spécifiée.

4. Une unité de commande électronique d'après une ou plusieurs des revendications précédentes, sachant que le micro-ordinateur (2) utilisé pour les véhicules de la première classe et pour les véhicules de la deuxième classe présentent le même nombre de portes d'entrée (21 ; 2a-2f) et/ou de portes de sortie (23 ; 2g-2j).

5. Une unité de commande électronique d'après une ou plusieurs des revendications précédentes, sachant qu'un ou plusieurs circuits de sortie (5) du micro-ordinateur (2) restent raccordés à un ou plusieurs portes de sortie (2g-2j) respectives, de manière que ces portes de sortie (2g-2j) sont préférablement mises dans un état ouvert (711, 721, 731 et 741) en ne faisant émettre au micro-ordinateur (2) aucun signal de commande (*no control signals*) à partir de ces portes de sortie (2g-2j).

6. Un procédé de commande pour une unité de commande électronique (1) équipée d'au moins un micro-ordinateur (2), le procédé de commande effectuant des calculs pour commander des cibles de commande en exécutant un programme spécifié, comprenant le fait de:
fournir une pluralité de classes, comprenant une première classe et une deuxième classe non équipée de quelques fonctions pourvues dans des véhicules automobiles de la première classe, et
effectuer un traitement de porte ouverte (*empty port processing*) en introduisant un signal, représentant le fait que la cible de commande n'est pas à conduire vers une porte d'entrée (2a-2f) du micro-ordinateur (2) correspondant à la fonction non pourvue dans la deuxième classe, dans l'unité de commande électronique (1 b) de la deuxième classe.

7. Un procédé de commande d'après la revendication 6, sachant que le pas d'introduction d'un signal est effectué au moyen d'un circuit de tirage (4 ; 61'-63') pour tirer la porte d'entrée (2a-2f) à un niveau haut.

8. Un procédé de commande d'après la revendication 6 ou 7, comprenant en outre un pas consistant à fournir de l'énergie au micro-ordinateur (2) au moyen d'un circuit d'alimentation électrique (3),
sachant que par le pas d'introduction d'un signal, la porte d'entrée (2a-2f) est branchée à la borne positive (+Vcc) du circuit d'alimentation électrique (3) en passant par une résistance (6c) spécifiée.

9. Un procédé de commande d'après les revendications de 6 à 7, comprenant en outre un pas consistant à garder un ou plusieurs circuits de sortie (5) du micro-ordinateur (2) raccordés à un ou plusieurs portes de sortie (2g-2j) respectives, de manière que ces portes de sortie (2g-2j) sont préférablement mises dans un état ouvert (711, 721, 731 et 741) en ne faisant émettre au micro-ordinateur (2) aucun signal de commande (*no control signals*) à partir de ces portes de sortie (2g-2j).

10. Un produit programme d'ordinateur comprenant des instructions lisibles par ordinateur, lequel, lorsqu'il est chargé et exécuté dans un système adéquat, effectue les pas d'un procédé de commande d'après une ou plusieurs des revendications de 6 à 9.
